# EUROPÄISCHE PATENTANMELDUNG

(11) **EP 1 338 889 A2**
(43) Veröffentlichungstag der Anmeldung: **27.08.2003**
(21) Anmeldenummer: 03001411.2
(22) Anmeldetag: 22.01.2003
(51) Int. Cl.: G01N 21/78

(54) **Verfahren und Mittel zum Nachweis von Fetten und Ölen**

(30) Priorität: 20.02.2002 DE 10206969
(71) Anmelder: MERCK PATENT GmbH, 64293 Darmstadt (DE)
(72) Erfinder: Linxweiler, Winfried, Dr., 64823 Gross-Umstadt (DE)

(57) **Zusammenfassung**

Die vorliegende Erfindung betrifft ein Verfahren und Mittel zum Nachweis von Fetten und fettartigen Substanzen unter Verwendung einer sauren Lösung eines Anthrachinonfarbstoffs. Bei Aufgabe der Lösung auf die Probe, die sich bevorzugt auf einem saugfähigen Träger befindet, tritt in Anwesenheit von Fett eine Farbänderung auf, die optisch bestimmt werden kann.

## Beschreibung

Die Erfindung betrifft ein Verfahren und Mittel zum Nachweis von Fett und fettartigen Verbindungen mittels eines Farbstoffs aus der Gruppe der Anthrachinonfarbstoffe. Die Erfindung betrifft weiterhin einen Test-Kit zur Durchführung des erfindungsgemäßen Verfahrens.

Bei der Herstellung und Verarbeitung von fetthaltigen Produkten wie z.B. Fleisch und Milchprodukten sind Verschmutzungen der Gerätschaften, Arbeitsflächen und Räumlichkeiten unumgänglich. Derartige Rückstände fördern die Ansiedlung und das Wachstum von Mikroorganismen und verschlechtern den Hygienestatus. Um dies zu vermeiden, wird insbesondere im Bereich der Lebensmittelherstellung und -verarbeitung eine Kontrolle des Hygienestatus durchgeführt. Es ist z.B. üblich, nach der Reinigung zu überprüfen, ob die Lebensmittelrückstände tatsächlich vollständig entfernt wurden.

Aus diesem Grund werden empfindliche und einfache Verfahren benötigt, mit denen die Lebensmittelrückstände wie Fett nachgewiesen werden können. Eine Möglichkeit zum Nachweis mikrobiologisch infizierter organischer Rückstände ist das Anlegen einer Bakterienkultur. Dies ist jedoch aufwändig und nimmt bis zum Vorliegend des endgültigen Ergebnisses zumeist mehrere Tage in Anspruch.
Daher werden Testverfahren bevorzugt, bei denen der Nachweis in kurzer Zeit z.B. durch Wechselwirkung mit Farbstoffen erfolgt, die in Anwesenheit bestimmter Verbindungen eine Farbreaktion oder einen Farbwechsel zeigen.

Als Verunreinigungsparameter spielen insbesondere Fett, Stärke und Proteine eine wichtige Rolle. Während für Stärke durch den Jod-Stärke-Nachweis und für Proteine beispielsweise in DE 198 46 846 Nachweismethoden zur Verfügung stehen, fehlt es bislang an einem einfachen und empfindliche Nachweis für Fette und fettartige Substanzen.

EP 0 715 713 beschreibt ein Verfahren zur Differenzierung organischer Lebensmittelrückstände wie Fett, Stärke und Eiweiß durch Aufbringen einer Farbstofflösung auf die zu untersuchenden Flächen. Die mit einem Farbstoffgemisch erzielten Ergebnisse lassen jedoch zumeist keinen eindeutigen Nachweis von Fett zu. Eine Änderung der Farbe erfolgt nicht. Zudem wird die Farbstofflösung direkt auf die zu untersuchende Fläche gegeben und kann so wiederum zu einer Kontamination der Fläche durch die in der Lösung enthaltenen Stoffe führen.

Aufgabe der vorliegenden Erfindung ist es daher, ein Verfahren zum Nachweis von Fett zu entwickeln, das die geschilderten Nachteile nicht aufweist und insbesondere schnell und einfach durchzuführen ist.

Es wurde gefunden, dass ein empfindlicher und einfacher Nachweis von Fett mithilfe von Verbindungen aus der Gruppe der Anthrachinonfarbstoffe möglich ist. Bevorzugt wird dazu die zu untersuchende Probe mit einem saugfähigen Träger wie z.B. einem Teststreifen aufgenommen und auf den Teststreifen eine saure Lösung des Farbstoffs aufgetropft. Innerhalb kurzer Zeit verfärbt sich der Teil des mit der Lösung angefeuchteten Teststreifens, der mit Fett in Berührung gekommen ist, während der übrige Teil seine ursprüngliche Färbung beibehält.

Gegenstand der vorliegenden Erfindung ist daher ein Verfahren zum Nachweis von Fetten und fettartigen Substanzen, wobei
a) eine saure Lösung eines Anthrachinonfarbstoffs mit der zu untersuchenden Probe in Kontakt gebracht wird
b) die auftretende Färbung optisch bestimmt wird.

In einer bevorzugten Ausführungsform wird in Schritt a) die Probe zunächst in einem Schritt a1) mit einem saugfähigen Träger in Kontakt gebracht. Dies kann beispielsweise durch Auftropfen einer flüssigen Probe erfolgen oder durch Abwischen einer zu untersuchenden Fläche mit dem Träger. Auf diesen Träger wird dann in einem Schritt a2) die saure Farbstofflösung aufgebracht.

In einer bevorzugten Ausführungsform wird die auftretende Färbung visuell bestimmt.

In einer anderen bevorzugten Ausführungsform wird in Schritt a1) ein saugfähiger Träger in Form eines Teststreifens eingesetzt.

In einer bevorzugten Ausführungsform enthält die saure Lösung einen Anthrachinonfarbstoff, der mindestens eine Aminogruppe aufweist, die mit einem C1-C8-Alkyl- oder einem C6-C12-Aryl-Rest substituiert ist.

Gegenstand der vorliegenden Erfindung ist auch ein Mittel zum Nachweis von Fett und fettartigen Substanzen, bestehend aus einer wässrigen sauren Lösung eines Anthrachinonfarbstoffes.

In einer bevorzugten Ausführungsform weist der Anthrachinon-Farbstoff mindestens eine Aminogruppe auf, die mit einem C1-C8-Alkyl- oder einem C6-C12-Aryl-Rest substituiert ist.

In einer weiteren bevorzugten Ausführungsform enthält das Mittel Sulfosalicylsäure, Sulfotoluolsäure oder Oxalsäure.

Gegenstand der vorliegenden Erfindung ist auch ein Testkit zum Nachweis von Fett und fettartigen Substanzen zumindest enthaltend eine wässrige saure Lösung eines Anthrachinonfarbstoffes und einen festen saugfähigen Träger.

Gegenstand der vorliegenden Erfindung ist weiterhin die Verwendung einer wässrigen sauren Lösung eines Anthrachinonfarbstoffes zum Nachweis von Fett und fettartigen Substanzen.

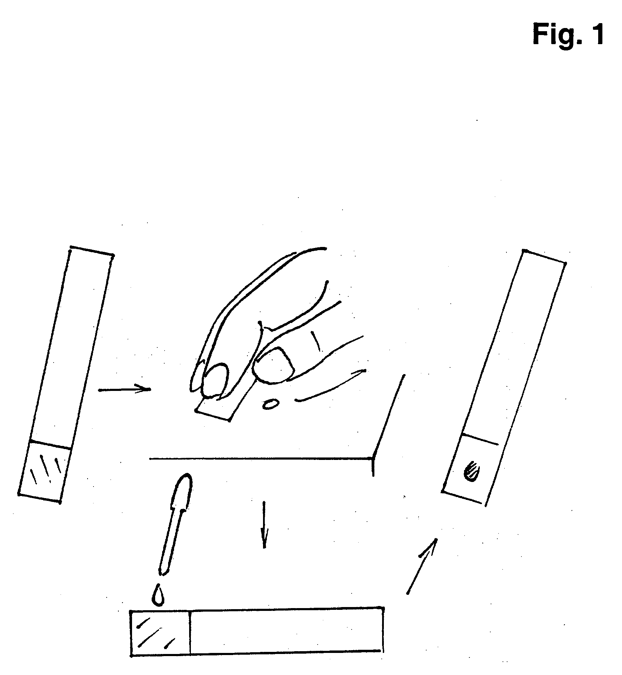

Abbildung 1 zeigt eine mögliche Durchführung des erfindungsgemäßen Verfahrens.

Als Fette und fettartige Substanzen werden erfindungsgemäß pflanzliche und tierische Fette oder Öle und äquivalente synthetisch hergestellte Verbindung betrachtet, sowie Lipide und andere hydrophobe, fettartige Substanzen wie beispielsweise Silicon-Fette.

Die zu untersuchenden Proben können flüssig oder fest sein. Bevorzugt wird das erfindungsgemäße Verfahren zum Nachweis von Fett und fettartigen Substanzen in Verunreinigungen auf Flächen, wie insbesondere Arbeitsoberflächen, Oberflächen von Arbeitsgeräten, Lebensmitteln oder auch Haut eingesetzt.

Als Träger wird erfindungsgemäß eine feste, saugfähige Matrix bezeichnet. Sie besteht typischerweise aus schwamm- oder schaumstoffartigen Materialien, wie Polyurethan-, Polyester- oder Polyether-Schäumen, aus organischen oder anorganischen Faserfloren, verdichteten Fasermassen, Vliesen, Gewirken oder Geweben wie z.B. Papier. Die saugfähige Matrix kann aus Gründen der Stabilität oder zur vereinfachten Handhabung auf eine Stützschicht z.B. aus Kunststoff oder Metall aufgebracht sein. Beispiele für erfindungsgemäß geeignete Träger sind Bausche, mehrschichtige Vliese, Tupfer oder bevorzugt Teststäbchen. Teststäbchen bestehen aus einer länglichen, typischerweise rechteckig geformten Stützschicht, bevorzugt in Form eines biegsamen Plastikplättchens mit einer Länge zwischen 2 und 10 cm und einer Breite von 0,5 bis 2 cm, auf die auf einer Seite die feste, saugfähige Matrix aufgebracht ist. Die Matrix kann die gesamte Stützschicht bedecken oder nur einen Teil, beispielsweise ein Ende der rechteckigen Stützschicht.

Es wurde nun gefunden, dass Verbindungen aus der Gruppe der Anthrachinonfarbstoffe, insbesondere Aminoanthrachinone, Fette oder Öle anfärben und eine andere Farbe zeigen als in saurer wässriger Lösung und dass eine saure Lösung dieser Stoffe erfolgreich zum Nachweis von Fetten und Ölen eingesetzt werden kann. Dabei erfolgt in saurer Lösung wahrscheinlich eine Protonierung des Anthrachinonringes am Chinonsauerstoff, wobei die geladene Form des Farbstoffes eine andere Farbe besitzt als die ungeladene Form. Die ungeladene Form ist in der Fettphase besser löslich als die geladene Form und färbt das Fett, während die hydrophile Umgebung durch die Farbe der protonierten Form geprägt wird. Dieser Farbkontrast, der von der Art des Anthrachinonfarbstoffes abhängt, erlaubt es nun, das Fett optisch nachzuweisen.

In Abhängigkeit von der verwendeten Anthrachinonverbindung ist eine unterschiedlich stark saure Lösung notwendig, um den Farbkontrast in Anwesenheit von Fetten zu erzielen. Eine Farbänderung durch Protonierung des Anthrachinonkerns ist bei Verwendung hochkonzentrierter anorganischer Säuren wie Schwefelsäure oder Phosphorsäure möglich. Wegen ihrer Gefährlichkeit und zerstörenden Wirkung auf organische Substanzen oder z.B. Teststäbchen oder Tupfer aus Cellulose sind diese Säuren für den Einsatz in einem Test auf Fette oder Lipide wenig geeignet.

Daher sind substituierte Anthrachinone wesentlich besser als Farbstoffe für den erfindungsgemäßen Nachweis geeignet. Bevorzugt sind dies Anthrachinon-Verbindungen, die an einer oder mehreren Positionen einen elektronenschiebenden Rest tragen. Elektronenschiebende Rest sind Reste, die einen +l oder +M-Effekt zeigen, wie Alkyl-, Aryl, Alkoxy- oder Aminogruppen, insbesondere mono oder di-C1 bis C8-Alkylamino oder mono- oder di- C6-C12-Arylaminogruppen oder Methoxy-, Ethyloxy- oder Propyloxygruppen. Bevorzugt werden erfindungsgemäß Anthrachinone eingesetzt, die mindestens eine C1 bis C8-Alkylamino oder C6-C12-Arylaminogruppe tragen. Besonders bevorzugt werden Verbindungen der Formel I eingesetzt, wobei R 1 bis R 4 unabhängig voneinander H oder C1 bis C8 Alkyl sein können, insbesondere Methyl, Ethyl, iso-Propyl, n-Propyl, n-Butyl, tert-Butyl, n-Pentyl oder n-Hexyl. Bevorzugt ist R1 und R3 H und R2 und R4 C1 bis C8 Alkyl.

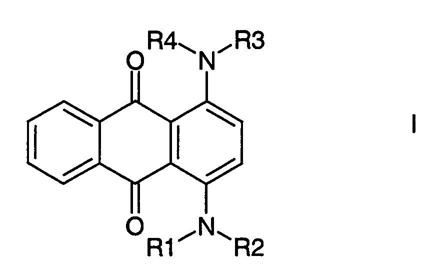

Besonders bevorzugt sind erfindungsgemäß insbesondere 1,4-Bisbutylamino-2-methoxyanthrachinon, 1,4-Bis-butylamino-anthrachinon (Solvent Blue 35) und 1,4-Bis-isopropylamino-anthrachinon (Solvent blue 36).

Die erfindungsgemäß eingesetzte saure Farbstofflösung enthält zumindest einen Anthrachinonfarbstoff und Wasser, das durch Zusatz einer Säure auf einen pH-Wert < 7 gebracht wurde. Der benötigte pH-Wert hängt von dem eingesetzten Anthrachinonfarbstoff ab. Für die bevorzugt eingesetzten Anthrachinonderivate der Formel I liegt der pH-Wert typischerweise unter pH 2. In Abhängigkeit von dem Lösungsverhalten des Anthrachinonfarbstoffs kann es vorteilhaft sein, der Lösung zusätzlich bis zu 50%, bevorzugt bis zu 30Vol%, eines mit Wasser mischbaren organischen Lösungsmittels zuzusetzen. Geeignete Lösungsmittel sind beispielsweise Methanol, Ethanol, n-Propanol, iso-Propanol oder Ethylenglykol. Weiterhin kann die Lösung übliche Konservierungsmittel enthalten.
Der optimale Gehalt sowie die Wahl der Säure der Farbstofflösung hängt vom jeweiligen Anthrachinonfarbstoff ab. Als Säure können anorganische oder bevorzugt organische Säuren oder Gemische davon eingesetzt werden. Bevorzugt werden nicht toxische, organische Säuren eingesetzt. Für die bevorzugt eingesetzten Anthrachinonfarbstoffe, welche eine oder mehrere alkylierte oder arylierte Aminogruppen besitzen, werden bevorzugt organischen Säuren wie Sulfosalicylsäure, Sulfotoluolsäure oder Oxalsäure oder Gemische davon verwendet.

Ein Fachmann ist in der Lage, die geeignete Zusammensetzung der Lösung und den damit zu erreichenden Farbwechsel mittels des folgenden einfachen Experiments zu ermitteln:
Der Farbstoff wird zu einer 1 : 1 Mischung der sauren wässrigen Lösung und Olivenöl zugegeben. Nach intensivem Schütteln und Trennen der beiden Phasen durch Stehenlassen zeigt die Ölphase eine charakteristische Farbe, die sich von der Farbe der wässrigen Phase deutlich unterscheiden sollte.
Eine Liste typischer Anthrachinonfarbstoffe und ihre Farbausbildung unter sauren wässrigen Bedingungen bzw. in Anwesenheit von Fett/Lipid (z.B. Olivenöl) zeigt Tab. 1.
Für alle in Tab. 1 gezeigten Untersuchungen wurde als wässrige Lösung Wasser mit einem Zusatz von 30% Isopropanol verwendet.

**Tabelle 1**

| Farbstoff | Sulfo-salicylsäure [Gew%] | Oxalsäure [Gew%] | Farbe (Wässrige Phase) | Farbe (Ölphase) |
|---|---|---|---|---|
| Solvent blue | 15% | 0% | Rotviolett | Blau |
| Solvent blue 36 | 2% | 10% | Blauviolett | Blau |
| 1,4-Bis-butylamino-2-methoxy-anthrachinon | 0% | 15% | Blauviolett | Blau |
| Disperse blue 14 | 15% | 0% | rosa | bläulich |

Für das erfindungsgemäße Verfahren zum Nachweis von Fett wird die wässrige saure Farbstofflösung mit der zu untersuchenden Probe in Kontakt gebracht. Im Fall flüssiger Proben werden diese bevorzugt auf einen saugfähigen Träger, wie beispielsweise einen Tupfer oder Teststreifen aufgebracht. Anschließend wird die saure Farbstofflösung auf diese Stelle des Trägers aufgetropft. Innerhalb von wenigen Minuten, typischerweise innerhalb von 1-2 Minuten, bildet sich an der Stelle des Trägers, an der er mit Fett oder Lipiden in Kontakt gekommen ist, eine andere Farbe aus als in dem umgebenden Bereich, wo er nur mit der sauren Lösung getränkt wurde.

Sollen feste Unterlagen wie Arbeitsflächen oder Geräte auf Verunreinigungen mit Fett hin untersucht werden, so kann die saure Lösung direkt auf die zu untersuchende Fläche aufgebracht werden und die Farbänderung an den Stellen beobachtet werden, an denen sich Fettrückstände befinden. Nachteilig ist jedoch, dass bei dieser Vorgehensweise die Arbeitsflächen in direkten Kontakt mit der Farbstofflösung kommen. Zudem können die Flächen selbst gefärbt sein und so ein Erkennen der Färbung erschweren. Aus diesem Grund wird in diesem Fall das erfindungsgemäße Verfahren bevorzugt wie folgt durchgeführt:
Die zu untersuchende Fläche wird mit einem saugfähigen Träger in Kontakt gebracht, so dass sich eventuelle Fettreste von der Fläche auf den Träger übertragen. Dies ist beispielsweise durch festes Wischen oder Abreiben der Fläche mit dem Träger möglich.

Zur Unterstützung des Übertrags auf den Träger kann dieser gegebenenfalls vorher mit einem Lösungsmittel (z.B. 30% Isopropanol in Wasser) leicht angefeuchtet werden.

Anschließend wird die saure Farbstofflösung auf den Träger aufgetropft, so dass sie die Stelle des Trägers, an der er in Kontakt mit der zu untersuchenden Fläche war, anfeuchtet. Befinden sich auf dem Träger Rückstände von Fett, Öl oder ähnlichem, so tritt an diesen Stellen des Trägers eine Färbung auf, die sich von der Färbung der Umgebung unterscheidet. Dieser Unterschied kann visuell problemlos erkannt werden oder z.B. mittels reflektometrischer Vermessung der Farbzone halbquantitativ bestimmt werden.

Abbildung 1 zeigt schematisch die Vorgehensweise zum Nachweis von Fettrückständen auf Oberflächen mithilfe des erfindungsgemäßen Verfahrens. Zunächst wird mit einem Träger in Form eines Teststreifens über die Oberfläche gewischt. Auf diese Weise übertragen sich die Rückstände auf der Oberfläche auf den Träger. Anschließend wird die saure Farbstofflösung auf den Teststreifen aufgetropft. An der Stelle, an der die Matrix des Teststreifens mit Fettrückständen in Kontakt gekommen ist, tritt nach kurzer Zeit eine Färbung auf, die sich von der Färbung der Umgebung unterscheidet.

Gegenstand der vorliegenden Erfindung ist auch ein Testkit zur Durchführung des erfindungsgemäßen Verfahrens zumindest bestehend aus einem Träger und einer sauren Farbstofflösung. Besonders bevorzugt enthält der Testkit mindestens einen Teststreifen und eine Farbstofflösung, die einen Anthrachinonfarbstoff, der eine oder mehrere alkylierte oder arylierte Aminogruppen besitzt. Besonders bevorzugt enthält die Farbstofflösung mindestens eine der Säuren Sulfosalicylsäure, Sulfotoluolsäure oder Oxalsäure.

Somit stellt die vorliegende Erfindung ein schnelles, einfaches und empfindliches Verfahren zum Nachweis von Fett und fettartigen Substanzen zur Verfügung. Es ist insbesondere für den Bereich der Hygienekontrolle in der Lebensmittelbe- und verarbeitung geeignet, da wenig oder nicht toxische Verbindungen eingesetzt werden können. Zudem wird durch die Verwendung eines saugfähigen Trägers der Kontakt der Nachweisreagenzien mit den zu untersuchenden Flächen vermieden.

Beispielsweise können mit dem erfindungsgemäßen Verfahren ca. 1µl Olivenöl verdünnt in Hexan (1:100 Vol% = 10µg Öl) auf einen Träger aufgebracht nachgewiesen werden und etwa 1 µl Milch mit 3 % Fettt verdünnt in Wasser (1:10 = 3 µg Milchfett).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung DE 1 02 06 969, eingereicht am 20.02.2002, ist durch Bezugnahme in diese Anmeldung eingeführt.

### Beispiele

### 1. Synthese von 1,4-Bis-butylamino-2-methoxyanthrachinon

10,85 g Dispers Red II (1,4-Diamino-2-methoxyanthrachinon, 40 mmol) wird in 100 ml Diethylketon gelöst und in einem Dreihals-Rundkolben vorgelegt. 40 g Dikaliumcarbonat (710 mmol) werden zugegeben, 11,6 ml Butyljodid (100 mmol) zugetropft, alles mit trockenem Stickstoff oder Argon begast und geschlossen. Es wird unter Rückfluss 6 Stunden auf 90°C erhitzt (Ölbad), weitere 2 ml Butyljodid zugegeben und weitere12 Stunden erhitzt. Es entstehen neben dem gewünschten Produkt 1,4-Bis-butylamino-2-methoxyanthrachinon (Smp. 146-148°C) noch 1,4-Bis-dibutylamino-2-methoxyanthrachinon (Smp. 97-101°C) und Monobutyldiamino-2-methoxyanthrachinon (Smp. 149-153°C).
Die Aufreinigung erfolgt mittels Säulenchromatographie an Kieselgel:
Nach Entfernen des Salzes und des Lösungsmittels nach der Synthese wird das Rohprodukt in n-Hexan gelöst und auf eine Kieselgelsäule aufgetragen. Die Elution erfolgt mit Diethylether/n-Hexan 10:1.
Analytik: Die Analytik erfolgt mittels Dünnschichtchromatographie (Feste Phase: Kieselgel, Eluens ist Diethylether / n-Hexan 10:1, Rf-Wert = 0,73)

### 2. Farbaufspaltung des Farbstofflösung zwischen wässriger Phase und Ölphase

### Beispiel a:

Es wird eine Farbstofflösung hergestellt bestehend aus 0,04% Solvent Blue 35 in 15 % Sulfosalicylsäure und 30% Isopropanol. Davon werden 500 µl zu 500 µl Olivenöl pipettiert und geschüttelt. Nach Trennung der beiden Phasen hat sich die Ölphase blau gefärbt, während die wässrig-alkoholische Phase rotviolett gefärbt ist.

### Beispiel b:

Es wird eine Farbstofflösung hergestellt bestehend aus 0,04% 1,4-Bisbutylamino-2-methoxyanthrachinon in 15 % Oxalsäure und 30% Isopropanol. Davon werden 500 µl zu 500 µl Olivenöl pipettiert und geschüttelt. Nach Trennung der beiden Phasen hat sich die Ölphase blau gefärbt, während die wässrig-alkoholische Phase blauviolett gefärbt ist.

### 3. Nachweis von Fett auf Oberflächen

Eine schematische Darstellung der Durchführung des Nachweises findet sich in Abbildung 1.

### Beispiel a):

Es wird eine Farbstofflösung hergestellt bestehend aus 0,04% Solvent Blue 35 in 15 % Sulfosalicylsäure und 30% Isopropanol. Es werden Teststäbchen auf Basis von Polypropylen (Länge: 6 cm, Breite: 1,5 cm, Dicke: 1 mm) mit einer am Ende des Stäbchens befindlichen Papierfläche (Breite: 1,5 cm, Länge 2 cm, Dicke: 0,3 mm, Binzer Nr. 1252, Kleber:
Dynapol-Leim) hergestellt. Auf eine glatte Oberfläche wird ein Tröpfchen Milch oder Olivenöl (2µl) appliziert und mit dem Papierfeld des Teststäbchens aufgewischt. Es wird anschließend ein Tropfen der Farbstofflösung zugegeben und 1-2 min gewartet. Der auf dem Papierfeld befindliche Fettfleck färbt sich blau, während die Umgebung pink gefärbt ist.

### Beispiel b:

Es wird eine Farbstofflösung hergestellt bestehend aus 0,04% Solvent Blue 36 in 10 % Oxalsäure, 2% Sulfosalicylsäure und 30% Isopropanol. Es werden Teststäbchen auf Basis von Polypropylen (Länge: 6 cm, Breite: 1,5 cm, Dicke: 1 mm) mit einer am Ende des Stäbchens befindlichen Papierfläche (Breite: 1,5 cm, Länge 2 cm, Dicke: 0,3 mm, Binzer Nr. 1252, Kleber: Dynapol-Leim) hergestellt. Auf eine glatte Oberfläche wird ein Tröpfchen Milch oder Olivenöl (2µl) appliziert und mit dem Papierfeld des Teststäbchens aufgewischt. Es wird anschließend ein Tropfen der Farbstofflösung zugegeben und 1-2 min gewartet. Der auf dem Papierfeld befindliche Fettfleck färbt sich blau, während die Umgebung lilablau gefärbt ist.

### Beispiel c:

Es wird eine Farbstofflösung hergestellt bestehend aus 0,04% 1,4-Bisbutylamino-2-methoxyanthrachinon in 10 % Oxalsäure und 30% Isopropanol. Es werden Teststäbchen auf Basis von Polypropylen (Länge: 6 cm, Breite: 1,5 cm, Dicke: 1 mm) mit einer am Ende des Stäbchens befindlichen Papierfläche (Breite: 1,5 cm, Länge 2 cm, Dicke: 0,3 mm, Binzer Nr. 1252, Kleber: Dynapol-Leim) hergestellt. Auf eine glatte Oberfläche wird ein Tröpfchen Milch oder Olivenöl (2 µl) appliziert und mit dem Papierfeld des Teststäbchens aufgewischt. Es wird anschließend ein Tropfen der Farbstofflösung zugegeben und 1-2 min gewartet. Der auf dem Papierfeld befindliche Fettfleck färbt sich blau, während die Umgebung schwach lilablau gefärbt ist.

## Patentansprüche

1. Verfahren zum Nachweis von Fetten und fettartigen Substanzen, **dadurch gekennzeichnet, dass**
a) eine saure Lösung eines Anthrachinonfarbstoffs mit der zu untersuchenden Probe in Kontakt gebracht wird
b) die auftretende Färbung optisch bestimmt wird.

2. Verfahren nach Anspruch 1, **dadurch gekennzeichnet, dass** in Schritt a) die Probe zunächst in einem Schritt a1) auf einen saugfähigen Träger aufgebracht wird und auf diesen Träger in einem Schritt a2) die saure Farbstofflösung aufgebracht wird.

3. Verfahren nach einem der Ansprüche 1 oder 2, **dadurch gekennzeichnet, dass** die auftretende Färbung visuell bestimmt wird.

4. Verfahren nach einem der Ansprüche 2 oder 3, **dadurch gekennzeichnet, dass** in Schritt a1) ein saugfähiger Träger in Form eines Teststreifens eingesetzt wird.

5. Verfahren nach einem oder mehreren der Ansprüche 1 bis 4, **dadurch gekennzeichnet, dass** die saure Lösung einen Anthrachinonfarbstoff enthält, der mindestens eine Aminogruppe aufweist, die mit einem C1-C8-Alkyl- oder einem C6-C12-Aryl-Rest substituiert ist.

6. Mittel zum Nachweis von Fett und fettartigen Substanzen, bestehend aus einer wässrigen sauren Lösung eines Anthrachinonfarbstoffes.

7. Mittel nach Anspruch 6, **dadurch gekennzeichnet, dass** der Anthrachinon-Farbstoff mindestens eine Aminogruppe aufweist, die mit einem C1-C8-Alkyl- oder einem C6-C12-Aryl-Rest substituiert ist.

8. Mittel nach einem der Ansprüche 6 oder 7, **dadurch gekennzeichnet, dass** es Sulfosalicylsäure, Sulfotoluolsäure oder Oxalsäure enthält.

9. Testkit zum Nachweis von Fett und fettartigen Substanzen zumindest enthaltend eine wässrige saure Lösung eines Anthrachinonfarbstoffes und einen festen saugfähigen Träger.

10. Testkit nach Anspruch 9, **dadurch gekennzeichnet, dass** die saure Lösung einen Anthrachinonfarbstoff enthält, der mindestens eine Aminogruppe aufweist, die mit einem C1-C8-Alkyl- oder einem C6-C12-Aryl-Rest substituiert ist.

11. Verwendung einer wässrigen sauren Lösung eines Anthrachinonfarbstoffes zum Nachweis von Fett und fettartigen Substanzen.
